# EUROPÄISCHE PATENTSCHRIFT

(11) **EP 3 449 159 B1**
(45) Veröffentlichungstag und Bekanntmachung des Hinweises auf die Patenterteilung: **22.11.2023**
(21) Anmeldenummer: 17715941.5
(22) Anmeldetag: 07.04.2017
(51) Int. Cl.: F16H 63/04, F16D 23/04, F16H 3/78

(54) **AUTOMATGETRIEBE MIT EINER SCHALTBAUGRUPPE**
AUTOMATIC TRANSMISSION WITH A SHIFT ASSEMBLY
TRANSMISSION AUTOMATIQUE AVEC UN ENSEMBLE DE COMMANDE

(30) Priorität: 28.04.2016 DE 102016207262
(43) Veröffentlichungstag der Anmeldung: 06.03.2019
(73) Patentinhaber: Voith Patent GmbH, 89522 Heidenheim (DE)
(72) Erfinder: SCHEERER, Jörg, 89542 Herbrechtingen (DE)
(74) Vertreter: Voith Patent GmbH - Patentabteilung
(86) Internationale Anmeldenummer: PCT/EP2017/058324
(87) Internationale Veröffentlichungsnummer: WO 2017/186473

(56) Entgegenhaltungen:
- WO-A1-92/01173
- DE-A1- 10 203 488
- DE-A1-102008 010 064
- DE-B3-102011 084 257
- FR-A1- 2 830 301

## Beschreibung

Die Erfindung betrifft ein Automatgetriebe für ein Kraftfahrzeug mit einer Schaltbaugruppe zur Koppelung einer Antriebsbaugruppe mit einer Abtriebsbaugruppe.

Automatgetriebe sind allgemein bekannt. Beispielhaft soll hier auf die DE 20 21 543 A1 verwiesen werden, welche ein kombiniert hydrodynamisch - mechanisches Getriebe für Fahrzeuge mit Teilung der Traktionsleistung mittels eines Differentialgetriebes auf einen Kraftweg mit einem hydrodynamischen Wandler und einen parallel dazu liegenden mechanischen Kraftweg und mit einer Zusammenführung der Traktionsleistung auf einen gemeinsamen Kraftweg beschreibt. Dabei weist das Getriebe mechanische, wahlweise ein- und ausschaltbaren Übersetzungsstufen (Gänge) im hydrodynamischen und/oder mechanischen und/oder im gemeinsamen Kraftweg auf.

Üblicherweise werden in allen Automatgetrieben, den so genannten Differentialwandlergetriebe (DIWA), mehrere Planetensätze verwendet. Diese Planetensätze werden in einem vorbestimmten festen Koppelschema miteinander verbunden. Mit Lamellenkupplungen beziehungsweise Lamellenbremsen werden dann die verschiedenen Übersetzungen des Getriebes realisiert. Durch entsprechendes Schalten der Lamellen von Kupplungen beziehungsweise Bremsen wird typischerweise erreicht, dass eine Schaltung erfolgen kann, ohne dass es zu einer Zugkraftunterbrechung kommt.

Den bekannten vielfältigen Vorteilen der Automatgetriebe stehen als Nachteil der hohe Bauteilaufwand an Planetensätzen und Lamellenkupplungen beziehungsweise Lamellenbremsen gegenüber.

Zu Behebung dieses Nachteils wird in der EP 2 162 643 A1 ein Koppelschema vorgeschlagen, das genau einen Planetensatz hinter dem Wandler aufweist, wobei zwischen der Antriebsseite bzw. dem letzten Planetensatz und der Abtriebsseite bzw. der Abtriebswelle eine Klauenkupplung angeordnet ist, die auch als Schalteinheit bezeichnet werden kann, wobei die Schalteinheit ein Teil einer nicht näher offenbarten Schaltbaugruppe ist. Dieser Schaltbaugruppe werden auch die Synchronisationsmittel und die Betätigungsmittel der Klauenkupplung zugeordnet. Eine weitere Schaltbaugruppe mit Kupplung wird in der DE 41 12 330 A1 offenbart.

DE 10 2011 084 257 B3 offenbart eine Synchronisiereinrichtung für ein Zahnradwechselgetriebe. Eine innenverzahnte Schiebemuffe kann auf einem außenverzahnten Synchronkörper verschoben werden, der eine Drehzahlangleichung zu angrenzenden Kupplungskörpern bewirkt. Die aus diesem Dokument bekannten Merkmale sind im Oberbegriff des Anspruchs 1 zusammengefasst.

Zum weiteren Stand der Technik wird verwiesen auf FR 2 830 301 A1, WO 92/01173 A1, DE 102 03 488 A1 und DE 10 2008 010 064 A1.

Eine der Aufgaben der Erfindung ist es, eine Schaltbaugruppe vorzuschlagen, die dahingehend optimiert ist, dass ein platzsparender und kostengünstiger Einbau der Schaltbaugruppe zwischen einer Antriebsbaugruppe und einer Abtriebsbaugruppe in einem Automatgetriebe für ein Kraftfahrzeug ermöglicht wird. Erfindungsgemäß wird diese Aufgabe durch ein Automatgetriebe mit einer Schaltbaugruppe gemäß Anspruch 1 gelöst. Weitere vorteilhafte Ausgestaltungen und bevorzugte Lösungsvarianten sind in den hiervon abhängigen Unteransprüchen beschrieben.

Erfindungsgemäß wird eine Schaltbaugruppe zur Koppelung einer Antriebsbaugruppe mit einer Abtriebsbaugruppe in einem Automatgetriebe für ein Kraftfahrzeug vorgeschlagen, wobei die Antriebsbaugruppe und die Abtriebsbaugruppe um eine gemeinsame Getriebeachse A drehbar gelagert sind. Dabei umfasst die Schaltbaugruppe eine Schalteinheit, welche ebenfalls um die Getriebeachse A drehbar ist sowie axial verschiebbar und drehfest mit der Abtriebsbaugruppe gekoppelt ist, wobei die Schalteinheit ein Element zur kraftschlüssigen und ein Kraftübertragungselement zur formschlüssigen Kopplung von Antriebsbaugruppe und Abtriebsbaugruppe umfasst.

Weiterhin ist die erfindungsgemäße Schaltbaugruppe derart aufgebaut, dass das Kraftübertragungselement zur formschlüssigen Kopplung in Bezug auf die Getriebeachse A in Radialrichtung gesehen außerhalb des Elements zur kraftschlüssigen Koppelung angeordnet ist.

Diese grundlegende Anordnung von formschlüssiger und reibschlüssiger Kopplung, zueinander ermöglicht einen besonders kompakten Aufbau der Schaltbaugruppe im Getriebegehäuse, wobei in Bezug auf die Getriebeachse A in Radialrichtung gesehen so zu verstehen ist, dass die formschlüssige und reibschlüssige Kopplungen auf zwei unterschiedlichen Durchmessern in Bezug auf die Getriebeachse A angeordnet sind.

Erfindungsgemäß ist vorgesehen, dass die Schalteinheit mit der Abtriebsbaugruppe drehfest gekoppelt ist. Weiterhin ist das Kraftübertragungselement ringförmig ausgeführt, wobei das Element eine Innenverzahnung aufweist und weiterhin mit der Abtriebsbaugruppe über eine am Außendurchmesser angeordnete Schiebeverbindung drehfest gekoppelt ist. Weiterhin ist vorgesehen, dass das weitere Element ein Synchronisationsring, aufweisend zumindest zwei Reibflächen, ist.

Die Antriebsbaugruppe umfasst ein Planetengetriebe. Dabei ist das Hohlrad des Planentengetriebes mit einem ersten Koppelbauteil, aufweisend eine erste Gegenreibfläche, und der Planetenträger des Planetengetriebes mit einem zweiten Koppelbauteil, aufweisend eine zweite Gegenreibfläche, gekoppelt. Das Planetengetriebe kann vorteilhaft über eine Bremse derart geschaltet werden, dass die Koppelbauteile und damit auch die Reibflächen unterschiedliche Antriebsdrehzahlenbereiche abdecken können.

Des Weiteren sind die Koppelbauteile derart ausgeführt, dass diese jeweils eine am Außenumfang angebrachte Außenverzahnung aufweisen, die mit der Innenverzahnung an dem Kraftübertragungselement durch das axiale Verschieben der Schalteinheit in Eingriff bringbar sind.

Die Koppelbauteile weisen ringförmige Bereiche auf, wobei Gegenreibflächen alternativ an den innenliegenden oder außenliegenden Ringflächen angeordnet sind. Je nach Ausführung kann der Synchronisationsring so vorteilhaft entweder radial innerhalb oder außerhalb der ringförmigen Bereiche angeordnet sein.

Die Kopplung zwischen Schiebeverbindung und Synchronisationsring kann wie aus dem Stand der Technik bekannt ausgeführt sein. Je nach Anordnung der Gegenreibflächen müssen die Reibflächen am Synchronisationsring entsprechend innenliegend oder außenliegend angeordnet sein, so dass die Reibflächen beim Verschieben der Schiebeverbindung in Eingriff bringbar sind. Der grundsätzliche Ablauf der Synchronisation ist für beide Anordnungsvarianten gleich und allgemein aus dem Stand der Technik bekannt. Die Reibflächen sind also derart angeordnet, dass während der Verschiebung die Reibung zwischen den Reibflächen immer größer wird und so, dass Drehzahldifferenzen zwischen Antriebsseite und Abtriebsseite ausgeglichen werden.

Die Schalteinheit ist in zumindest drei Positionen bringbar, so dass zumindest folgende Verbindungen schaltbar sind. Eine drehfeste Verbindung zwischen Hohlrad und Abtriebsbaugruppe, eine drehfeste Verbindung zwischen Planetenträger und Abtriebseinheit oder eine Leerlaufstellung, bei der im Wesentlichen keine Drehmomentübertragung zwischen Antriebsseite und Abtriebsseite erfolgt. Im Wesentlichen bedeutet in diesem Fall, dass es im Leerlauf passieren kann, dass noch sehr geringe Drehmomente über die Synchronisationsringe übertragen werden könnten.

Mittels einer Betätigungsvorrichtung kann die axiale Verschiebung der Schalteinheit umgesetzt werden. Dabei kann die Betätigungsvorrichtung mittels eines Betätigungselementes betätigt werden. Wobei das Betätigungselement beispielsweise ein Pneumatik- oder Hydraulikzylinder oder ein elektrisches Schaltelement sein kann. Je nach Platzverhältnis können also unterschiedliche Anordnungen und/oder Verschiebemechanismen zum Einsatz kommen.

In einer bevorzugten Ausführung umfasst die Abtriebsbaugruppe eine Abtriebswelle, wobei die Schiebeverbindung an der Abtriebswelle angeordnet ist. Alle Bauteile der Schalteinheit können in dieser Ausführung vorteilhaft innerhalb der glockenhaften Ausführung der Antriebswelle untergebracht werden und die Betätigungsvorrichtung kann außerhalb der Glocke angeordnet werden, wobei das Verbindungselement von Schalteinheit und Betätigungsvorrichtung um die Glocke herum geführt wird.

In einer weiteren Ausführung kann die Abtriebswelle im Bereich der Schiebeverbindung zumindest einen Durchbruch aufweist, der derart ausgeführt ist, dass die Schalteinheit über den Durchbruch in der Antriebswelle mittels der Betätigungsvorrichtung entlang der Schiebeverbindung verschiebbar ist.

Das erfindungsgemäße Automatgetriebe umfasst eine Antriebsbaugruppe, eine Abtriebsbaugruppe, die um eine gemeinsamen Getriebeachse A drehbar gelagert sind, und eine entsprechende der vorangehenden Beschreibung ausgeführte Schaltbaugruppe. Weiterhin umfasst die Antriebsbaugruppe ein Planetengetriebe, sodass über die Schaltbaugruppe wahlweise die Kopplung zwischen Hohlrad und Abtriebsbaugruppe, zwischen Planetenträger und Abtriebsbaugruppe oder eine Leerlaufstellung schaltbar ist.

Weitere Merkmale der erfindungsgemäßen Schaltbaugruppe und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: die Anordnung der Schaltbaugruppe zwischen Antriebsbaugruppe und Abtriebsbaugruppe
- Figur 2: eine erste Ausführung der Schaltbaugruppe
- Figur 3: eine zweite Ausführung der Schaltbaugruppe
- Figur 4: eine alternative Anordnung der Reibflächen
- Figur 5: eine alternative Schiebeverbindung

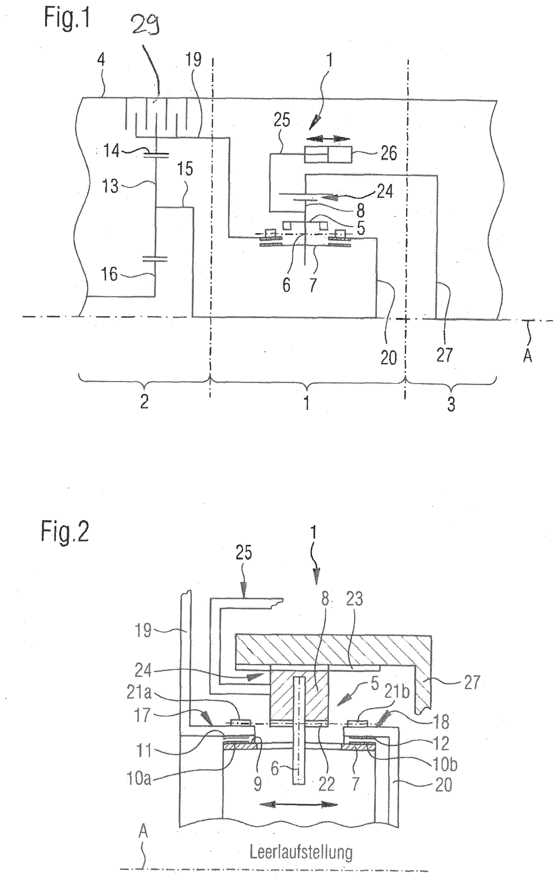

Figur 1 ist eine Skizze aus der die Anordnung der Schaltbaugruppe 1 zwischen Antriebsbaugruppe 2 und Abtriebsbaugruppe 3 hervorgeht. Die Darstellung umfasst nur die für die Erfindung wesentlichen Teile. Erfindungsunwesentliche Bauteile eines Automatgetriebes, wie z.B. der Eingangskorb mit Planetensätzen, Bremsen und Kupplungen wurden weggelassen. In der hier dargestellten Ausführung sind die Baugruppen 2, 1, 3 in dem Getriebegehäuse rotationssymetrisch um die Getriebeachse A angeordnet untergebracht, wobei die einzelnen Baugruppenabschnitte auch ineinander verschachtelt in das Getriebegehäuse eingebaut sein können.

Mittels der Schaltbaugruppe ist die Abtriebswelle 27 der Abtriebsseite 3 derart mit der Antriebsseite 2 koppelbar, dass unterschiedliche Übersetzungsverhältnisse geschaltet werden können. Je nach Schaltung der Lamellenbremse 29 werden die mit dem Planetengetriebe 13 verbundenen Koppelbauteile 19, 20 mit unterschiedlichen Drehzahlen angetrieben.

Zwischen den Koppelbauteilen 19, 20 und der Abtriebswelle 27 ist die Schaltbaugruppe 1 angeordnet. Diese umfasst einen Schalteinheit 5 die mittels einer Betätigungsvorrichtung 25 in drei Schaltstellungen verschiebbar ist, wobei die Verschiebung entlang einer Schiebeverbindung 24 erfolgt. In Fig. 1 ist die Schalteinheit 5 in der Neutralstellung dargestellt. In dieser Stellung erfolgt keine Drehmomentübertragung zwischen Antriebsseite 2 und Abtriebsseite 3.

Bei Betätigung der Schaltbaugruppe 1 wird die Schalteinheit 5 in eine der beiden weiteren Schaltstellungen geschoben. So kann wahlweise eine der folgenden Verbindungen geschaltet werden. Eine drehfeste Verbindung zwischen Hohlrad 14 und Abtriebsbaugruppe 3 und eine drehfeste Verbindung zwischen Planetenträger 13 und Abtriebseinheit 3.

Die Schalteinheit 5 setzt sich im Wesentlichen aus einer Synchronisationseinheit, mit einem Synchronisationsring 7, und dem Kraftübertragungselement 8 zusammen, die über den Schieber 6 verbunden sind. Der Schieber 6 ist mit der Betätigungsvorrichtung 25 verbunden, die eine Schaltkraft aufbringt.

Bei einer Schaltung wird die Schalteinheit entlang der Schiebeverbindung 24 verschoben, so dass die Reibflächen 10a, b, 11 und 12, von Synchronisationsring 7 und Koppelbauteilen 19, 20 in Eingriff gebracht werden. Während des Verschiebens erhöht sich die Reibkraft zwischen den Reibflächen 10a, b, 11 und 12, so dass sich die Drehzahlen von Antriebsseite und Abtriebsseite aneinander angleichen können. Ist die Drehzahldifferenz klein genug kann eine weitere Verschiebung erfolgen, bei der das Kraftübertragungselement 8 auf eines der Koppelbauteile 19, 20 geschoben wird, so dass die Innenverzahnung des Kraftübertragungselementes 8 und eine der Außenverzahnungen 21a oder 21b ineinandergreifen und so eine formschlüssige Verbindung entsteht.

In Figur 2 ist eine erste Ausführung der Schaltbaugruppe 5 dargestellt. Die Abtriebswelle 27 ist in dieser Ausführung an dem zur Schalteinheit 5 ausgerichteten Ende als Hohlwelle ausgeführt. Innerhalb dieses Hohlwellenabschnittes ist die Schaltbaugruppe 5 untergebracht. Die Betätigungsvorrichtung 25 ist außerhalb des Hohlwellenabschnittes angeordnet, wobei auf die genaue Darstellung des Betätigungsmittels 26 zur Ansteuerung der Schaltbaugruppe verzichtet wurde.

Das Kraftübertragungselement 8 ist als Ringelement ausgeführt und ist über eine Schiebeverbindung 24 mit der Abtriebswelle 27 gekoppelt. Die Schiebeverbindung kann eine umlaufende Verzahnung oder auch eine andere formschlüssige Verbindung sein. An dem Kraftübertragungselement 8 ist mittig der Schieber 6 angeordnet, so dass Antriebs- und Abtriebsseitig ein Abschnitt der Innenverzahnung 22 bei der Verschiebung in die Außenverzahnungen 21a, 21b der Koppelbauteile 19, 20 eingreifen kann.

Weiterhin ist der Synchronring 7 mit dem Schieber 6 in einer Art und Weise gekoppelt, dass eine Synchronisation gewährleistet werden kann. Eine derartige Kopplung wie auch die spezielle Ausführung von Synchronring 7 und Schieber 6 ist aus dem Stand der Technik allgemein bekannt, so dass auf eine weitere Ausführung verzichtet wird.

In der dargestellten Leerlaufstellung ist der Synchronring 7 mittig zwischen den Koppelbauteilen 19, 20 ausgerichtet und die Reibflächen 10a und 11 sowie 10b und 12 sind zueinander beabstandet, so dass kein Drehmoment übertragen werden kann. Weiterhin sind die Reibflächenebenen in einem leichten Winkel zur Achse A angeordnet, so dass bei der Verschiebung die Reibflächen keilförmig gegeneinander bewegt werden.

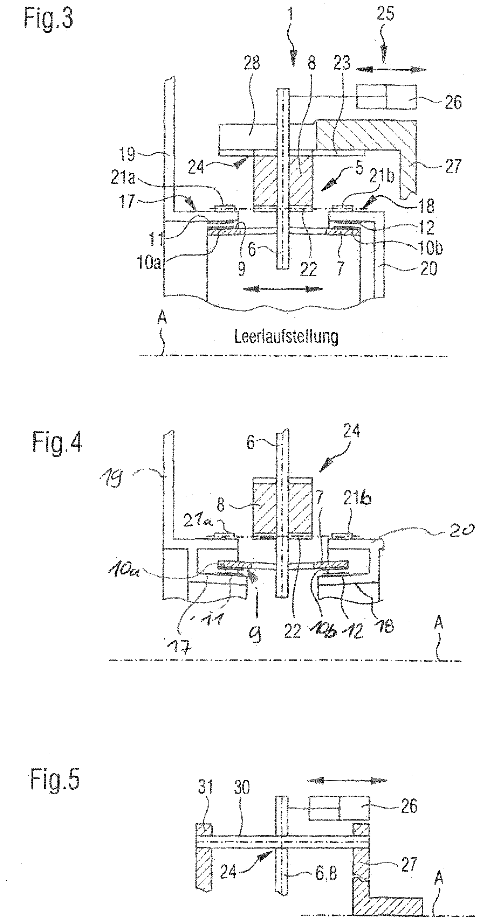

In Figur 3 ist eine zweite Ausführung der Schaltbaugruppe 5 dargestellt, die sich dadurch unterscheidet, dass die Betätigung der Schalteinheit über einen Ausschnitt in der Abtriebswelle erfolgt. Dabei kann ein Teilabschnitt des Schiebers 6, wie hier dargestellt, durch den Hohlwellenabschnitt der Abtriebswelle 27 ragen, an den dann direkt das Betätigungselement ankoppelt. Alternativ können über den Umfang verteilt mehrere Teilabschnitte des Schiebers 6 durch Ausschnitte im Hohlwellenabschnitt ragen und auch mehrere Betätigungselemente 26 vorgesehen sein. So kann vorteilhaft insbesondere ein Verkanten beim Synchronisieren vermieden werden.

Figur 4 zeigt eine alternative Anordnung der Reibflächen zueinander bzw. eine alternative Anordnung des Synchronisationsrings 7. Die Koppelbauteile 19, 20 weisen in dieser Ausführung zusätzliche zylinderförmige Bereiche 17, 18 auf, an denen die Reibflächen 11, 12 angeordnet sind. Die grundsätzliche Arbeitsweise bei der Synchronisierung ist in beiden Ausführungen identisch, wobei die bei der Drehung wirkende Zentrifugalkraft bei der Ausführung nach Fig. 1 bis 3 eher zu einer Verkleinerung des Leerlaufspaltes zwischen den Reibflächen führen könnte und bei der Anordnung entsprechend Fig 4 eher zu einer Vergrößerung des Leerlaufspaltes zwischen den Reibflächen führen könnte.

Figur 5 zeigt eine alternative Schiebeverbindung für die Schaltbaugruppe 5. In dieser Ausführung sind anstelle der Schiebeverzahnung 24 über den Umfang der Abtriebswelle 27 verteilt Führungsstangen 30 vorgesehen. Der Schieber 6 kann wie hier dargestellt, entlang der Führungsstangen 30 verschoben werden, wobei die Betätigungsvorrichtung 26 ebenfalls an den Schieber 6 gekoppelt ist. Zur Stabilisierung der Führungsstangen 30 kann wie hier dargestellt ein Ring 31 vorgesehen sein.

Die Ausführung der Betätigungsvorrichtung 25 ist in allen Darstellungen symbolisch zu verstehen. Um ein Verkanten beim Verschieben zu vermeiden, können beispielsweise mehrere Kolben auf dem Umfang verteilt werden oder es kann ein Ringkolben verwendet werden.

### Bezugszeichenliste

- 1: Schaltbaugruppe
- 2: Antriebsbaugruppe
- 3: Abtriebsbaugruppe
- 4: Automatgetriebe / (Gehäuse)
- 5: Schalteinheit
- 6: Schieber
- 7: Synchronisationsring
- 8: Kraftübertragungselement
- 9: Ringfläche
- 10a, b: Reibfläche
- 11, 12: Gegenreibfläche
- 13: Planetengetriebe
- 14: Hohlrad
- 15: Planetenträger
- 16: Sonnenrad
- 17, 18: zylinderförmigen Bereiche
- 19, 20: Koppelbauteil
- 21a, b: Außenverzahnung
- 22: Innenverzahnung
- 23: Innenverzahnung
- 24: Schiebverbindung
- 25: Betätigungsvorrichtung
- 26: Betätigungselementes
- 27: Abtriebswelle
- 28: Durchbruch
- 29: Lamellenbremse
- 30: Führungsstangen
- 31: Ring

## Patentansprüche

1. Automatgetriebe (4) für ein Kraftfahrzeug, umfassend eine Antriebsbaugruppe (2), eine Abtriebsbaugruppe (3), die um eine gemeinsamen Getriebeachse (A) drehbar gelagert sind, und eine Schaltbaugruppe (1) mittels der die Antriebsbaugruppe (2) mit der Abtriebsbaugruppe (3) koppelbar ist, mit einer Schalteinheit (5), welche um die Getriebeachse (A) drehbar gelagert ist sowie axial verschieblich und drehfest mit der Abtriebsbaugruppe (3) gekoppelt ist, wobei die Schalteinheit (5) ein Element (7) zur kraftschlüssigen und ein Kraftübertragungselement (8) zur formschlüssigen Kopplung von Antriebsbaugruppe (2) und Abtriebsbaugruppe (3) umfasst, wobei
das Kraftübertragungselement (8) zur formschlüssigen Kopplung in Bezug auf die Getriebeachse (A) in Radialrichtung gesehen außerhalb des Elements (7) zur kraftschlüssigen Koppelung angeordnet ist,
**dadurch gekennzeichnet, dass**
das Kraftübertragungselement (8) und das Element (7) über einen Schieber (6) verbunden sind, der mit einer Betätigungsvorrichtung (25) verbunden ist, die eine Schaltkraft aufbringt,
das Kraftübertragungselement (8) ringförmig ausgeführt ist und eine Innenverzahnung (22) aufweist und dass das Kraftübertragungselement (8) mit der Abtriebsbaugruppe (3) über eine am Außendurchmesser angeordnete Schiebeverbindung (24) drehfest gekoppelt ist;
das Element (7) ein Synchronisationsring, aufweisend zumindest zwei Reibflächen (10a, 10b), ist;
dass die Antriebsbaugruppe (2) ein Planetengetriebe (13) umfasst;
dass ein Hohlrad (14) des Planentengetriebes (13) mit einem ersten Koppelbauteil (19) aufweisend eine erste Gegenreibfläche (11) und ein Planetenträger (15) des Planetengetriebes (13) mit einem zweiten Koppelbauteil (20) aufweisend eine zweite Gegenreibfläche (12) gekoppelt sind;
die Koppelbauteile (19, 20) jeweils eine am Außenumfang angeordnete Außenverzahnung (21a, 21b) aufweisen, die wahlweise mit der Innenverzahnung (22) an dem Kraftübertragungselement (8) durch das axiale Verschieben der Schalteinheit (5) in Eingriff bringbar sind;
die Koppelbauteile (19, 20) ringförmige Bereiche (17, 18) aufweisen, wobei Gegenreibflächen (11, 12) alternativ an innenliegenden oder außenliegenden Ringflächen der ringförmigen Bereiche (17, 18) angeordnet sind, und die Reibflächen (10a, 10b) des Synchronisationsrings mit den Gegenreibflächen (11, 12) der Koppelbauteile (19, 20) durch die Verschiebung der Schalteinheit (5) entlang der Schiebeverbindung (24) in Kontakt bringbar sind.

2. Automatgetriebe (4) gemäß Anspruch 1, **dadurch gekennzeichnet, dass** die Schalteinheit (5) in zumindest drei Positionen bringbar ist, sodass zumindest folgende Verbindungen schaltbar sind, eine drehfeste Verbindung zwischen Hohlrad (14) und Abtriebsbaugruppe (3), eine drehfeste Verbindung zwischen Planetenträger (13) und Abtriebsbaugruppe (3) oder eine Leerlaufstellung, bei der im Wesentlichen keine Drehmomentübertragung zwischen Antriebsbaugruppe (2) und Abtriebsbaugruppe (3) erfolgt.

3. Automatgetriebe (4) gemäß Anspruch 1, **dadurch gekennzeichnet, dass** die Betätigungsvorrichtung (25) mittels eines Betätigungselementes (26) betätigt wird.

4. Automatgetriebe (4) gemäß Anspruch 3, **dadurch gekennzeichnet, dass** das Betätigungselement (26) ein Pneumatik- oder Hydraulikzylinder ist.

5. Automatgetriebe (4) gemäß Anspruch 1, **dadurch gekennzeichnet, dass** die Abtriebsbaugruppe (3) eine Abtriebswelle (27) umfasst, wobei die Schiebeverbindung (24) an der Abtriebswelle (27) angeordnet ist.

6. Automatgetriebe (4) gemäß Anspruch 5, **dadurch gekennzeichnet, dass** die Abtriebswelle (27) im Bereich der Schiebeverbindung (24) zumindest einen Durchbruch (28) aufweist, der derart ausgeführt ist, dass die Schalteinheit (5) über den Durchbruch (28) in der Antriebswelle (27) mittels der Betätigungsvorrichtung (25) entlang der Schiebeverbindung (24) verschiebbar ist.

## Claims

1. Automatic transmission (4) for a motor vehicle, comprising an input assembly (2) and an output assembly (3) which are rotatably mounted about a common transmission axis (A), and a shift assembly (1) by means of which the input assembly (2) can be coupled to the output assembly (3), with a shift unit (5) which is rotatably mounted about the transmission axis (A) and coupled axially moveably and rotationally fixedly to the output assembly (3), wherein the shift unit (5) has an element (7) for force-fit coupling and a force transmission element (8) for form-fit coupling of the input assembly (2) and output assembly (3), wherein
the force transmission element (8) for form-fit coupling is arranged outside the element (7) for force-fit coupling relative to the transmission axis (A), viewed in the radial direction,
**characterized in that**
the force transmission element (8) and the element (7) are connected via a slider (6) which is connected to an actuating device (25) which applies a shift force;
the force transmission element (8) is annular and has an internal toothing (22), and the force transmission element (8) is rotationally fixedly coupled to the output assembly (3) via a sliding connection (24) arranged on the outer diameter;
the element (7) is a synchronization ring having at least two friction surfaces (10a, b);
the input assembly (2) comprises a planetary gear mechanism (13);
a ring gear (14) of the planetary gear mechanism (13) is coupled to a first coupling component (19) having a first counter-friction surface (11), and a planet carrier (15) of the planetary gear mechanism (13) is coupled to a second coupling component (20) having a second counter-friction surface (12);
the coupling components (19, 20) each have an external toothing (21a, 22b) which is arranged on the outer periphery and can be brought optionally into engagement with the internal toothing (23) on the force transmission element (8) by the axial movement of the shift unit (5);
the coupling components (19, 20) have annular regions (17, 18), wherein counter-friction surfaces (11, 12) are arranged alternatively on internal or external ring faces of the annular regions (17, 18); and
the friction surfaces (10a, 10b) of the synchronization ring (7) can be brought into contact with the counter-friction surfaces (11, 12) of the coupling components (19, 20) by the movement of the shift unit (5) along the sliding connection (24).

2. Automatic transmission (1) according to Claim 1,
**characterized in that** the shift unit (5) can be brought into at least three positions, so that at least the following connections can be selected: a rotationally fixed connection between the ring gear (14) and the output assembly (3), a rotationally fixed connection between the planet carrier (13) and the output assembly (3), or an idle position in which substantially no torque is transmitted between the input assembly (2) and the output assembly (3).

3. Automatic transmission (1) according to Claim 1,
**characterized in that** the actuating device (25) is actuated by means of an actuating element (26).

4. Automatic transmission (1) according to Claim 3,
**characterized in that**
the actuating element (26) is a pneumatic or hydraulic cylinder.

5. Automatic transmission (1) according to Claim 1,
**characterized in that** the output assembly (3) comprises an output shaft (27), wherein the sliding connection (24) is arranged on the output shaft (27).

6. Automatic transmission (1) according to Claim 5,
**characterized in that** the output shaft (27) has at least one opening (28) in the region of the sliding connection (24), which is designed such that the shift unit (5) can be moved along the sliding connection (24) via the opening (28) in the input shaft (27) by means of the actuating device (25).

## Revendications

1. Transmission automatique (4) pour un véhicule automobile, comprenant un ensemble d'entraînement (2), un ensemble entraîné (3), qui sont montés rotatifs autour d'un axe de transmission commun (A), et un ensemble de commande (1) au moyen duquel l'ensemble d'entraînement (2) est apte à être relié à l'ensemble entraîné (3), avec une unité de commande (5) qui est montée rotative autour de l'axe de transmission (A) et qui est reliée à l'ensemble entraîné (3) de manière déplaçable axialement et non rotative, l'unité de commande (5) comprenant un élément (7) de liaison par force et un élément (8) de transmission de force pour un accouplement par complémentarité de forme de l'ensemble d'entraînement (2) et de l'ensemble entraîné (3), l'élément (8) de transmission de force pour l'accouplement par complémentarité de forme étant, vu dans la direction radiale, disposé à l'extérieur de l'élément (7) de liaison par force par rapport à l'axe de transmission (A),
**caractérisé en ce que**
l'élément (8) de transmission de force et l'élément (7) sont reliés par un coulisseau (6) qui est relié à un dispositif d'actionnement (25) qui applique une force de changement de vitesse,
l'élément (8) de transmission de force est réalisé en forme d'anneau et présente une denture intérieure (22) et **en ce que** l'élément (8) de transmission de force est relié solidairement en rotation à l'ensemble entraîné (3) par l'intermédiaire d'une liaison coulissante (24) disposée sur le diamètre extérieur ;
l'élément (7) est un anneau de synchronisation présentant au moins deux surfaces de friction (10a, 10b) ;
**en ce que** l'ensemble d'entraînement (2) comprend un engrenage planétaire (13) ;
**en ce qu'**une couronne dentée (14) d'engrenage planétaire de l'engrenage planétaire (13) est reliée à un premier composant d'accouplement (19) présentant une première surface de friction conjuguée (11) et qu'un porte-satellites (15) de l'engrenage planétaire (13) est accouplé à un deuxième composant d'accouplement (20) présentant une deuxième surface de friction conjuguée (12) ;
les composants d'accouplement (19, 20) présentent chacun une denture extérieure (21a, 21b) aménagée sur la périphérie extérieure, qui est apte à être sélectivement mise en prise avec la denture intérieure (22) de l'élément (8) de transmission de force par le déplacement axial de l'unité de commande (5) ;
les composants d'accouplement (19, 20) présentent des zones annulaires (17, 18), des surfaces de friction conjuguées (11, 12) étant aménagées de façon alternée sur des surfaces annulaires intérieures ou extérieures des zones annulaires (17, 18), et les surfaces de friction (10a, 10b) de l'anneau de synchronisation sont aptes à être mises en contact avec les surfaces de friction conjuguées (11, 12) des composants d'accouplement (19, 20) par le déplacement de l'unité de commande (5) le long de la liaison coulissante (24).

2. Transmission automatique (4) selon la revendication 1,
**caractérisée**
**en ce que** l'unité de commande (5) est apte à être amenée dans au moins trois positions, de sorte qu'au moins les liaisons suivantes sont aptes à être commutées, une liaison solidaire en rotation entre la couronne dentée (14) de l'engrenage planétaire et l'ensemble entraîné (3), une liaison solidaire en rotation entre le porte-satellites (13) et l'ensemble entraîné (3) ou une position de marche à vide, dans laquelle il n'y a essentiellement pas de transmission de couple entre l'ensemble d'entraînement (2) et l'ensemble entraîné (3).

3. Transmission automatique (4) selon la revendication 1,
**caractérisée**
**en ce que** le dispositif d'actionnement (25) est actionné au moyen d'un élément d'actionnement (26).

4. Transmission automatique (4) selon la revendication 3,
**caractérisée**
**en ce que** l'élément d'actionnement (26) est un vérin pneumatique ou hydraulique.

5. Transmission automatique (4) selon la revendication 1,
**caractérisée**
**en ce que** l'ensemble entraîné (3) comprend un arbre de sortie (27), la liaison coulissante (24) étant agencée sur l'arbre de sortie (27).

6. Transmission automatique (4) selon la revendication 5,
**caractérisée**
**en ce que** l'arbre de sortie (27) présente, dans la zone de la liaison coulissante (24), au moins un ajour (28) qui est réalisé de telle sorte que l'unité de commande (5) est apte à être déplacée le long de la liaison coulissante (24) par l'intermédiaire de l'ajour (28) dans l'arbre de sortie (27) au moyen du dispositif d'actionnement (25).
